# FASCICULE DE BREVET EUROPEEN

(11) **EP 0 734 027 B1**
(45) Date de publication et mention de la délivrance du brevet: **19.05.1999**
(21) Numéro de dépôt: 96400561.5
(22) Date de dépôt: 18.03.1996
(51) Int. Cl.: G21C 13/02, G21C 11/08

(54) **Dispositif d'assemblage de deux plaques du cloisonnement du coeur d'un réacteur nucléaire**
Vorrichtung zum Verbinden zweier Kernumfassungsplatten eines Kernreaktors
Arrangement for joining two core baffle plates of a nuclear reactor

(30) Priorité: 22.03.1995 FR 9503365
(43) Date de publication de la demande: 25.09.1996
(73) Titulaire: FRAMATOME, 92400 Courbevoie (FR)
(72) Inventeur: Fabris, Mirco, 95280 Jouy Le Moutier (FR)
(74) Mandataire: Bouget, Lucien

(56) Documents cités:
- EP-A- 0 186 012
- FR-A- 2 333 325
- US-A- 922 961
- US-A- 2 320 398
- US-A- 2 331 880
- US-A- 3 357 890

## Description

L'invention concerne un dispositif d'assemblage de deux plaques du cloisonnement entourant le coeur d'un réacteur nucléaire refroidi par de l'eau sous pression.

En particulier, le dispositif d'assemblage selon l'invention est destiné à remplacer un dispositif de fixation par vis devenu défectueux, par exemple par rupture de la vis.

Les réacteurs nucléaires à eau sous pression comportent, à l'intérieur d'une cuve, un coeur constitué par des assemblages de combustible juxtaposés et maintenus, suivant la périphérie du coeur, par un cloisonnement lui-même disposé et maintenu à l'intérieur d'une enveloppe de coeur de forme cylindrique. Le cloisonnement du coeur est constitué par des plaques assemblées entre elles par des dispositifs de fixation comportant des vis d'assemblage. Une partie des plaques disposées verticalement de manière à maintenir les assemblages périphériques du coeur, appelées cloisons, sont assemblées deux à deux à angle droit pour constituer un ensemble de maintien prismatique dont la section présente une forme complexe. Le cloisonnement comporte également un deuxième ensemble de plaques, appelées renforts, disposées horizontalement entre l'enveloppe de coeur et les cloisons. Les renforts qui sont répartis à des distances régulières suivant la hauteur du cloisonnement et du coeur sont fixés par des vis sur les cloisons.

Le cloisonnement du coeur qui est intercalé entre les assemblages périphériques du coeur et l'enveloppe du coeur comporte de nombreux dispositifs de fixation comprenant des vis d'assemblage de deux plaques disposées à angle droit. Les deux plaques assemblées par les dispositifs de fixation à vis peuvent être deux cloisons ou une cloison et un renfort.

Lorsque le réacteur nucléaire est en service, les assemblages du coeur, le cloisonnement et les dispositifs de fixation des plaques du cloisonnement sont en contact avec le fluide de refroidissement du réacteur nucléaire qui est constitué par de l'eau à très haute pression et à très haute température renfermant certains additifs chimiques. Les dispositifs de fixation des plaques du cloisonnement qui sont disposés dans des zones très proches des assemblages du coeur subissent un échauffement important et se trouvent, dans certaines parties, en contact avec de l'eau de refroidissement qui ne participe pas à la circulation du fluide de refroidissement dans le coeur et qui, en conséquence, ne se trouve pas renouvelée.

Les vis des dispositifs de fixation des plaques du cloisonnement dont certaines parties sont exposées à un liquide confiné à très haute température sont susceptibles d'être soumises, à l'intérieur du réacteur en fonctionnement, à des contraintes thermiques et mécaniques et à une corrosion importante.

On observe d'ailleurs certaines ruptures de vis du cloisonnement et pour éviter que les têtes de vis ayant subi une rupture deviennent des objets migrants à l'intérieur de la cuve et du circuit primaire du réacteur, lors de la mise en place des vis de fixation, on réalise le blocage et on assure l'imperdabilité des vis par des points de soudure entre la tête de vis et le cloisonnement.

Pour limiter la corrosion des vis de fixation et pour éviter leur rupture dans le réacteur en service, on a proposé dans le FR-A-2.333.325, de réaliser des canaux de passage de fluide autour du fût des vis, à l'intérieur des plaques dont elles assurent la fixation et des canaux traversant l'une des plaques ou usinés dans la vis pour déconfiner l'espace annulaire ménagé autour du fût de la vis. De ce fait, du fluide de refroidissement est susceptible de circuler au contact du fût des vis de fixation, à travers le cloisonnement. On évite ainsi tout effet d'ébullition ou de concentration d'un fluide confiné au contact des vis.

Cependant, pour permettre une circulation de fluide au contact des vis, à travers le cloisonnement, il est nécessaire de réaliser un usinage particulier du cloisonnement et/ou de la vis de fixation.

La réalisation de perçages dans le métal de la vis affaiblit celle-ci et diminue sa tenue à la corrosion dans le réacteur en service.

Dans le cas où l'on effectue le remplacement de vis de fixation ayant subi une rupture dans le réacteur en service, il est très difficile sinon impossible de réaliser certains usinages du cloisonnement dans des zones auxquelles il est difficile ou impossible d'accéder. De plus, il faut effectuer les usinages à distance et sous eau, du fait de la contamination du cloisonnement.

Le but de l'invention est donc de proposer un dispositif d'assemblage d'une première et d'une seconde plaques métalliques du cloisonnement entourant le coeur d'un réacteur nucléaire refroidi par de l'eau sous pression, disposées sensiblement à angle droit et en contact l'une avec l'autre, le dispositif d'assemblage comportant une vis ayant un fût fileté sur une partie au moins de sa longueur et une tête ayant un diamètre supérieur au diamètre du fût, une ouverture traversant la première plaque métallique et présentant une partie d'entrée dont le diamètre est supérieur au diamètre de la tête de la vis, une partie de sortie dont le diamètre est compris entre le diamètre de la tête et le diamètre du fût de la vis et un épaulement entre la partie d'entrée et la partie de sortie et une ouverture borgne taraudée dans la seconde plaque métallique, ce dispositif d'assemblage permettant de faire cesser de manière simple l'isolation du fluide de refroidissement au contact du fût de la vis sans effectuer de perçage de la vis.

Dans ce but, le dispositif d'assemblage suivant l'invention comporte au moins une ouverture de mise en communication d'un premier espace annulaire autour de la tête de vis, à l'intérieur de la partie d'entrée de l'ouverture avec un second espace annulaire autour du fût de la vis à l'intérieur de la partie de sortie de l'ouverture.

Afin de bien faire comprendre l'invention, on va maintenant décrire à titre d'exemple non limitatif, en se référant aux figures jointes en annexe, plusieurs modes de réalisation d'un dispositif d'assemblage suivant l'invention.

La figure 1 est une vue en élévation et en coupe partielle de la cuve d'un réacteur nucléaire à eau sous pression.

La figure 2 est une vue en plan et en coupe par un plan horizontal d'une partie du cloisonnement disposé à l'intérieur de la cuve de réacteur représentée sur la figure 1.

La figure 3 est une vue en coupe de deux plaques de cloisonnement assemblées par un dispositif de fixation suivant l'art antérieur.

La figure 4 est une vue en coupe analogue à la vue de la figure 3 de deux plaques de cloisonnement et d'un dispositif d'assemblage suivant l'invention et suivant un premier mode de réalisation.

La figure 5 est une vue suivant 5 de la figure 4.

La figure 6 est une vue en coupe analogue à la vue de la figure 4 de deux plaques de cloisonnement et d'un dispositif d'assemblage suivant le premier mode de réalisation et suivant une première variante de réalisation.

La figure 7 est une vue en coupe de deux plaques de cloisonnement et d'un dispositif d'assemblage suivant le premier mode de réalisation et suivant une seconde variante de réalisation.

La figure 8 est une vue suivant 8 de la figure 7.

La figure 9 est une vue en coupe axiale du logement d'une vis d'un dispositif d'assemblage suivant l'invention et suivant un second mode de réalisation.

La figure 10 est une vue de dessus suivant 10 de la figure 9.

La figure 11 est une vue en coupe axiale partielle du dispositif d'assemblage suivant l'invention et suivant le second mode de réalisation.

La figure 12 est une vue en coupe axiale du logement d'une vis d'un dispositif d'assemblage suivant l'invention et suivant une première variante de réalisation du second mode de réalisation.

La figure 13 est une vue de dessus suivant 13 de la figure 12.

La figure 14 est une vue en coupe axiale partielle du dispositif d'assemblage suivant l'invention et suivant la première variante du second mode de réalisation.

La figure 15 est une vue en coupe axiale du logement d'une vis d'un dispositif d'assemblage suivant l'invention et suivant une seconde variante du second mode de réalisation.

La figure 16 est une vue de dessus suivant 16 de la figure 15.

La figure 17 est une vue en coupe axiale partielle du dispositif d'assemblage suivant l'invention et suivant la seconde variante du second mode de réalisation.

La figure 18 est une vue en élévation et en coupe partielle d'une vis d'un dispositif d'assemblage suivant le second mode de réalisation.

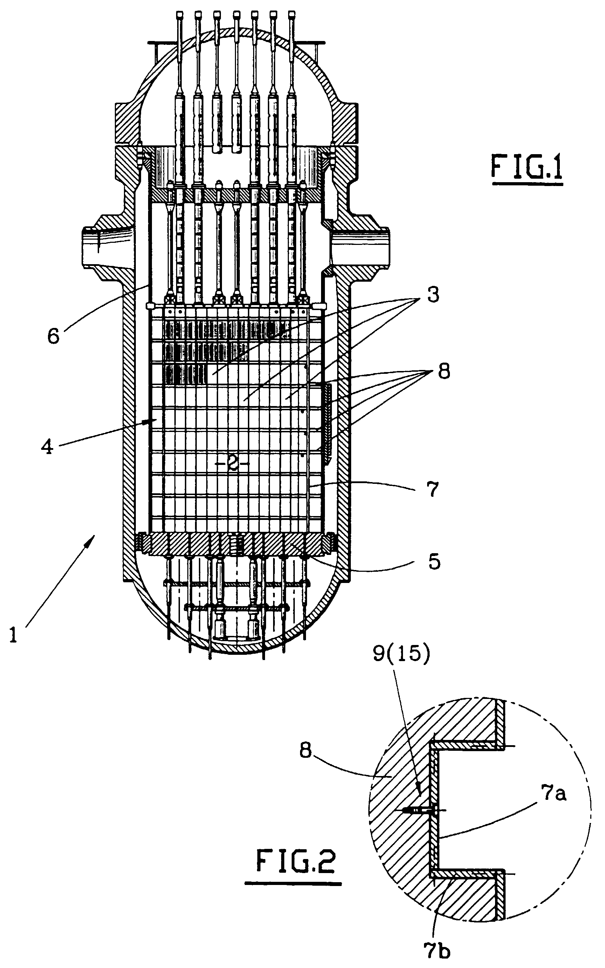

Sur la figure 1, on voit la cuve d'un réacteur nucléaire à eau sous pression désignée de manière générale par le repère 1 à l'intérieur de laquelle est disposé le coeur 2 du réacteur constitué par des assemblages de combustible 3 de forme prismatique placés de manière juxtaposée et reposant par leur extrémité inférieure sur une plaque de support 5.

L'ensemble du coeur est disposé à l'intérieur d'une enveloppe de coeur suspendue et fixée à l'intérieur de la cuve 1. La plaque 5 de support des assemblages de combustible est fixée sur l'enveloppe de coeur 6.

Un cloisonnement 4 assurant le maintien des assemblages de combustible 3 à l'intérieur du coeur est intercalé entre la partie périphérique externe du coeur 2 et la surface interne de l'enveloppe de coeur 6.

Le cloisonnement 4 est constitué par des cloisons verticales 7 et des renforts 8 disposés horizontalement entre les plaques de cloisonnement 7 et l'enveloppe de coeur 6 et répartis suivant la hauteur du coeur.

Comme il est visible sur la figure 2, les plaques telles que 7a, 7b du cloisonnement sont rapportées l'une contre l'autre et fixées l'une à l'autre, dans une disposition à angle droit. L'assemblage entre elles des cloisons telles que 7a et 7b est réalisé par des dispositifs comportant des vis engagées dans des ouvertures des cloisons 7a et 7b réalisées dans leur zone de contact. De même, l'assemblage des renforts tels que 8 aux cloisons verticales 7 du cloisonnement est réalisé par des assemblages vissés.

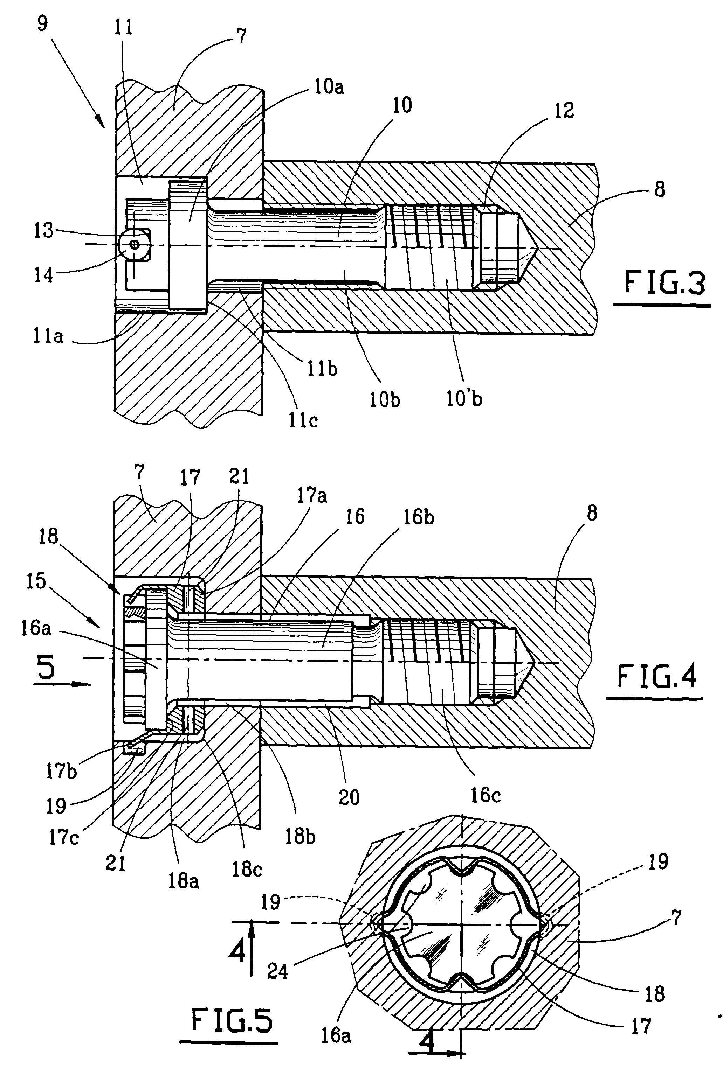

Sur la figure 3, on a représenté un dispositif de fixation désigné de manière générale par le repère 9 utilisé pour réaliser l'assemblage de deux plaques de cloisonnement 7 et 8 qui peuvent être par exemple une cloison telle que les cloisons 7a ou 7b représentée sur la figure 2 et un renfort 8. Le dispositif d'assemblage 9 comporte une vis 10 engagée à l'intérieur d'ouvertures 11 et 12 des plaques 7 et 8 respectivement placées dans le prolongement l'une de l'autre et constituant les éléments du dispositif d'assemblage, complémentaires de la vis 10.

L'ouverture 11 traverse la plaque 7 sur toute son épaisseur et comporte une partie d'entrée 11a dont le diamètre est supérieur au diamètre maximal de la tête de vis 10a et une partie de sortie 11b dont le diamètre est intermédiaire entre le diamètre de la tête de vis 10a et le diamètre du fût 10b de la vis.

Le fût 10b de la vis comporte une partie filetée 10'b qui est vissée à l'intérieur de l'ouverture 12 de la plaque 8 réalisée sous la forme d'un trou borgne taraudé.

Les parties 11a et 11b de l'ouverture 11 présentant des diamètres différents sont séparées par un épaulement 11c d'appui de la tête 10a de la vis, dans sa position de serrage et d'assemblage, comme représenté sur la figure 3.

La tête de vis 10a comporte, dans sa partie supérieure, une fente 13 permettant d'engager un outil de vissage de la vis 10, lors de l'assemblage du cloisonnement.

Après serrage de la vis 10, on introduit une goupille 14 dans la fente 13 de la tête de vis 10a et on soude les extrémités de la goupille 14 sur la plaque de cloisonnement 7, à l'intérieur de la partie élargie lla de l'ouverture 11.

En cas de rupture du fût de la vis 10 en-dessous de la tête 10a, dans le réacteur en fonctionnement, la tête 10a maintenue par la goupille 14 reste en place à l'intérieur de l'ouverture 11. Comme il est visible sur la figure 3, la partie 11b de l'ouverture 11 autour du fût 10b de la vis 10 et la partie de l'ouverture 12 de la plaque 8 autour du fût de la vis 10b constituent des espaces fermés par la tête de vis 10a en appui sur l'épaulement llc. De l'eau de refroidissement du réacteur est piégée et confinée dans ces deux espaces où elle peut entrer en ébullition et donner lieu à des phénomènes de concentration conduisant à une corrosion accrue de la vis 10.

Pour réaliser des canaux de circulation d'eau de refroidissement autour du fût de la vis, comme décrit dans le FR-A-2.333.325, il serait nécessaire d'effectuer des usinages supplémentaires des plaques 7 et 8 et de la vis 10.

En particulier, lorsque l'on effectue le remplacement d'une vis 10 ayant subi une rupture dans le réacteur en service, il peut être souhaitable de prévoir des usinages supplémentaires des plaques de cloisonnement, de manière à assurer une circulation de fluide de refroidissement autour de la vis de remplacement. Ces usinages doivent être réalisés sous eau et à distance. En outre, les plaques de renfort 8 du cloisonnement ne sont pas accessibles, seules les cloisons 7 étant accessibles par l'intérieur du cloisonnement.

Sur la figure 4, on a représenté un dispositif d'assemblage de deux plaques de cloisonnement, suivant un premier mode de réalisation de l'invention, qui permet de réaliser de manière très simple un espace de circulation d'eau de refroidissement autour du fût d'une vis d'assemblage.

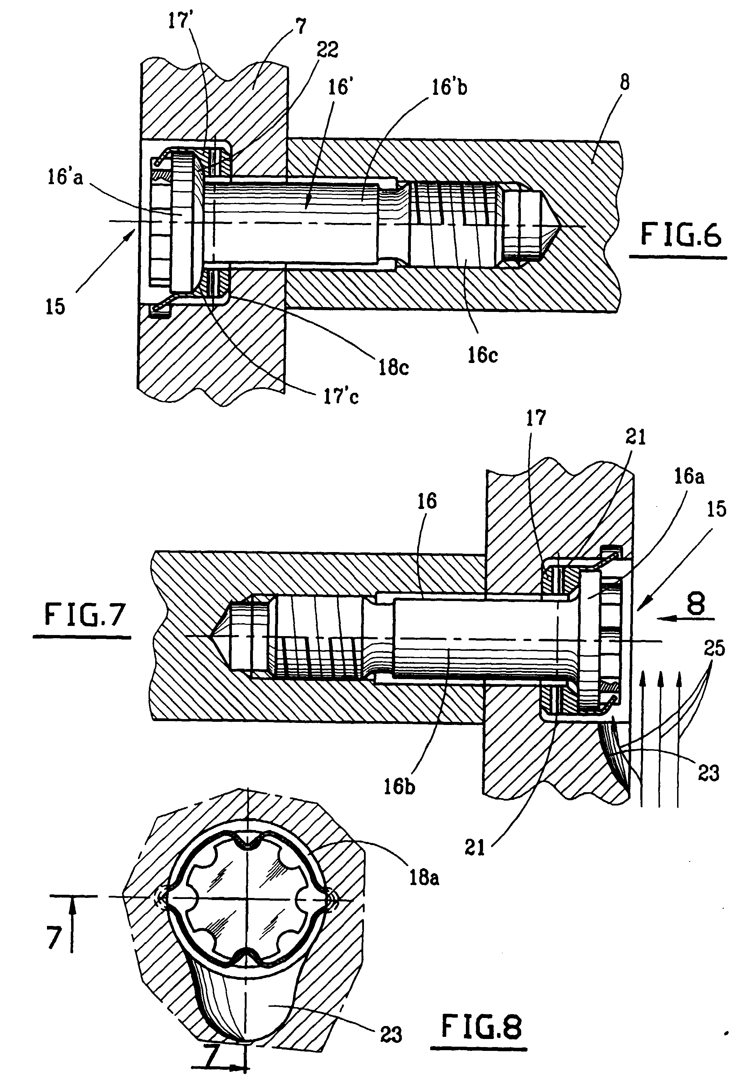

Sur les figures 4 et 5, on a représenté un dispositif d'assemblage suivant l'invention qui peut être substitué à un assemblage suivant l'art antérieur tel que représenté sur la figure 3, par exemple, à la suite d'une rupture de la vis 10 de l'assemblage 9.

Un tel remplacement et une telle réparation peuvent être effectués, pendant un arrêt du réacteur, à l'intérieur de la piscine du réacteur remplie d'eau.

Bien entendu, le dispositif d'assemblage suivant l'invention qui permet d'éviter les inconvénients du dispositif suivant l'art antérieur mentionné ci-dessus peut être également mis en place pour réaliser la fixation de plaques du cloisonnement, lors de la réalisation d'un cloisonnement neuf.

Sur les figures 4 et 5, on a représenté le dispositif d'assemblage suivant l'invention désigné de manière générale par le repère 15.

Le dispositif d'assemblage 15 est constitué par un logement réalisé par usinage à l'intérieur des plaques 7 et 8 à assembler, une vis 16 de serrage et d'assemblage des plaques 7 et 8 et une coupelle 17 intercalée entre la tête de vis et une partie du logement de réception de la vis à l'intérieur de la plaque 7.

Le logement de la vis 16 à l'intérieur des plaques 7 et 8 est réalisé par réusinage des ouvertures 11 et 12 des plaques 7 et 8, après démontage de la vis 10 ayant subi une rupture. Le démontage de la vis 10 est effectué par usinage de la goupille 14 de maintien de la tête de vis pour la séparer de la plaque 7, par enlèvement de la tête de vis puis par dévissage ou usinage du fût de la vis, afin de l'extraire de l'ouverture de la plaque 8. Le réusinage des ouvertures des plaques 7 et 8 comporte le réalésage de la partie 11a de l'ouverture 11 traversant la plaque 7 constituant une cloison verticale pour obtenir une nouvelle partie d'entrée 18a, élargie diamétralement, de l'ouverture 18 traversant la plaque 7. La partie de sortie 18b de l'ouverture 18 de la plaque 7 qui a été réusinée peut être constituée par la partie 11b de l'ouverture 11 ou par la partie 11b de l'ouverture 11 légèrement réalésée.

Le diamètre de la partie d'entrée 18a de l'ouverture traversante 18 est supérieur au diamètre de la tête de vis 16a et également supérieur au diamètre externe de la coupelle 17. Le diamètre de la partie de sortie 18b de l'ouverture traversante 18 est inférieur au diamètre de la partie 18a et supérieur au diamètre du fût 16b de la vis de remplacement 16.

Un épaulement 18c sépare les parties 18a et 18b de l'ouverture traversante.

Deux encoches 19 disposées de manière diamétralement opposée dans l'ouverture 18 sont usinées dans la paroi de la partie élargie 18a de l'ouverture 18, à une certaine distance de la face externe de la plaque 7.

L'ouverture 12 de la plaque 8 qui constitue un renfort horizontal est réusinée dans sa partie d'entrée, sous la forme d'un trou lisse dont le diamètre est supérieur au diamètre du fût 16b de la vis 16 et sensiblement égal au diamètre de la partie de sortie 18b de l'ouverture traversante 18. La partie inférieure du trou borgne taraudé 12 n'est pas réusinée, de sorte que le trou borgne 20 de la plaque 8 obtenu par réusinage du trou borgne 12 et constituant une partie du logement de la vis 16 comporte une partie d'entrée lisse dont le diamètre est supérieur au diamètre du fût de la vis et une partie taraudée pour le vissage d'une partie filetée 16c de la vis 16.

La coupelle 17 présente une forme générale annulaire et comporte une partie inférieure 17a venant en appui par son extrémité sur l'épaulement 18c de l'ouverture 18. L'alésage de la coupelle 17, dans la partie 17a, est supérieur au diamètre du fût 16b de la vis 16 et sensiblement égal au diamètre de la partie de sortie 18b de l'ouverture 18 ou de la partie lisse d'entrée de l'ouverture 20. La coupelle 17 est traversée, dans sa partie 17a, par des canaux 21 de direction radiale s'étendant entre la surface externe de la coupelle 17, à l'intérieur de l'ouverture élargie 18a et l'alésage intérieur de la partie 17a de la coupelle autour du fût 16b de la vis 16. Les canaux 21 assurent la mise en communication de l'espace annulaire ménagé autour du fût de la vis par les parties 18b et 20 du logement avec la partie d'entrée 18a de l'ouverture 18 communiquant avec l'intérieur du cloisonnement recevant les assemblages du coeur du réacteur.

La coupelle 17 comporte une partie 17b prolongeant la partie 17a à l'opposé de l'extrémité de la coupelle venant reposer sur l'épaulement 18c. La partie 17b de la coupelle est réalisée sous la forme d'une virole dont l'épaisseur est inférieure à l'épaisseur de la partie 17a de la coupelle. La partie annulaire 17b de faible épaisseur de la coupelle 17 peut être déformée à l'intérieur des logements 19 usinés à l'intérieur de l'ouverture 18a, ce qui assure un blocage en rotation et une retenue axiale de la coupelle 17 à l'intérieur de l'ouverture 18, par sertissage de la virole 17b dans les logements 19.

D'autre part, la tête 16a de la vis 16 comporte une partie externe limitée par une surface plane perpendiculaire à l'axe de la vis et comportant des embrèvements 24 de forme sensiblement semi-circulaire, comme il est visible sur la figure 5, sur une surface latérale ayant pour axe l'axe de la vis. Les embrèvements 24 permettent de réaliser le vissage et le dévissage de la vis 16 à l'aide d'un outil approprié et sans prévoir de fente à l'intérieur de la tête de la vis. De cette manière, il est possible d'utiliser une vis dont la tête présente une longueur plus faible que celle des vis suivant l'art antérieur dont la tête est fendue pour recevoir une lame de tournevis et une goupille d'arrêt soudée sur la plaque du cloisonnement.

En outre, la forme totalement plane de la surface externe de la tête de vis 16a permet de faciliter les contrôles de la vis, par exemple par ultrasons.

La virole déformable 17b de la coupelle 17 est déformée vers l'intérieur pour pénétrer dans deux embrèvements 24 alignés suivant un diamètre de la tête de vis. On réalise ainsi, par sertissage de la virole 17b, le blocage de la tête de vis et de la vis en rotation, par rapport à la coupelle 17, qui est elle-même bloquée en rotation à l'intérieur de l'ouverture 18 par sertissage à l'intérieur des deux ouvertures 19.

Après réusinage des ouvertures 18 et 20, on met en place la vis 16 engagée à l'intérieur de la coupelle 17, à l'intérieur du logement constitué par les ouvertures 18 et 20 puis on réalise le vissage de la vis 16 à l'intérieur de la partie taraudée de l'ouverture 20. A la fin du vissage, l'épaulement interne de la tête 16a vient en appui sur un épaulement 17c interne à la coupelle 17 séparant la virole de faible épaisseur 17b de la partie 17a de la coupelle. L'alésage interne de la virole 17b est égal ou supérieur au diamètre maximal de la tête de vis 16a.

Après vissage et serrage de la vis 16, la virole 17b de la coupelle 17 est déformée vers l'extérieur de manière à pénétrer dans les ouvertures 19 et vers l'intérieur, de manière à pénétrer dans deux ouvertures 24 diamétralement opposées. La vis est alors bloquée en rotation et la coupelle est retenue à l'intérieur de l'ouverture 18 de la plaque 7.

De plus, l'espace annulaire situé entre le fût 16b de la vis 16 et le logement de la vis est mis en communication par l'intermédiaire des ouvertures 21 avec la partie d'entrée 18a de l'ouverture 18 communiquant elle-même avec l'espace intérieur du coeur du réacteur. Le liquide de refroidissement venant au contact du fût de la vis ne se trouve donc pas confiné et isolé, ce qui évite son ébullition et des effets de concentration des espèces chimiques contenues par le fluide de refroidissement. On limite ainsi les risques de dégradation et de rupture de la vis 16 de remplacement.

De préférence, la partie de jonction entre la tête 16a et le fût 16b de la vis 16 présente une forme arrondie améliorant la tenue mécanique de la vis.

Le fût de la vis comporte d'autre part, entre sa partie lisse externe et sa partie filetée 16c, une gorge de forme arrondie.

Sur la figure 6, on a représenté une première variante de réalisation d'un dispositif d'assemblage 15 suivant l'invention. Les éléments correspondants du dispositif représenté sur les figures 4 et 6 sont désignés par les mêmes repères.

Le logement de la vis 16, à l'intérieur des plaques 7 et 8 à assembler, est réalisé de la même manière dans le cas du dispositif représenté sur la figure 4 et dans le cas du dispositif selon la variante représentée sur la figure 6.

La coupelle 17' du dispositif d'assemblage selon la variante représentée sur la figure 6 est réalisée d'une manière légèrement différente de la coupelle 17 du dispositif représenté sur la figure 4 du fait qu'elle comporte, entre sa partie d'appui interne sur l'épaulement 18c de l'ouverture 18 et la virole déformable constituant sa partie externe, une surface d'appui 17'c en forme de secteur sphérique concave, en remplacement de l'épaulement plat sur lequel la tête de vis 16a vient en appui dans le cas du mode de réalisation représenté sur la figure 4. La vis 16' selon le mode de réalisation représenté sur la figure 6 comporte elle-même, entre sa partie de tête 16'a et le fût 16'b, un épaulement d'appui 22 constitué par un secteur sphérique convexe dont la forme correspond à la forme du secteur sphérique concave 17'c de la coupelle 17'. On améliore ainsi le centrage et le serrage de la vis 16' contre la coupelle 17' en même temps qu'on diminue les contraintes subies par la vis dans la zone de jonction entre la tête et le fût.

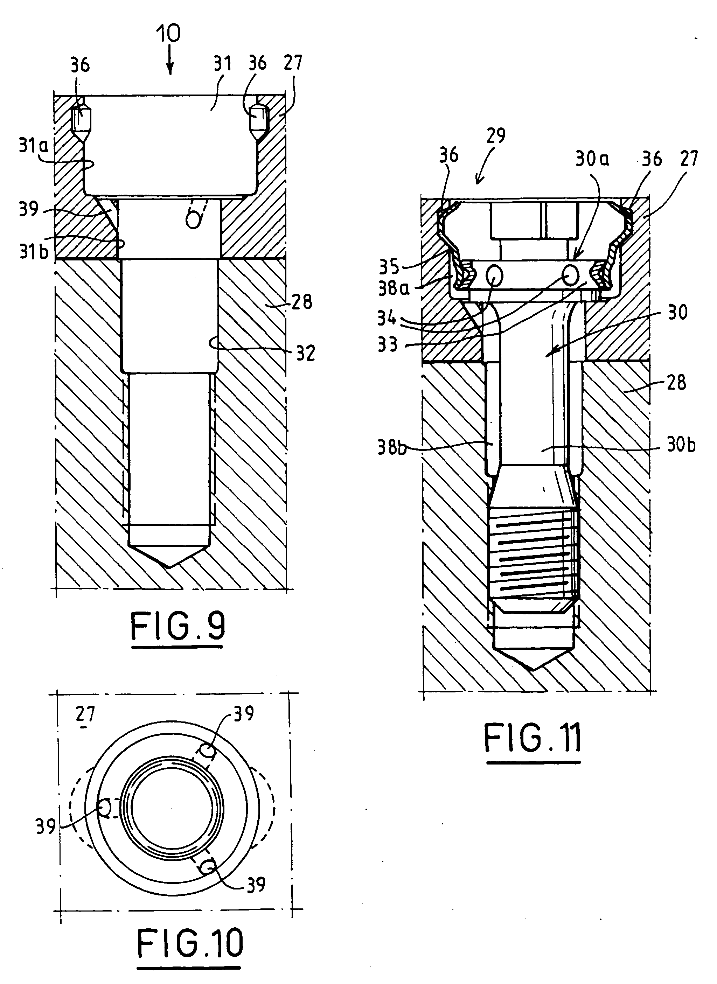

Sur les figures 7 et 8, on a représenté une deuxième variante de réalisation d'un dispositif d'assemblage 15 suivant l'invention.

La vis 16 et la coupelle 17 du dispositif 15 suivant la seconde variante sont identiques aux éléments correspondants du premier mode de réalisation représenté sur les figures 4 et 5.

Le logement de la vis 16 est aussi sensiblement identique au logement de la vis dans le cas du premier mode de réalisation. Cependant, on réalise un usinage supplémentaire de la surface externe de la cloison 7, c'est-à-dire de la surface de la plaque verticale venant en contact avec un assemblage à l'intérieur du coeur du réacteur, cet usinage supplémentaire ayant la forme d'un embrèvement 23 prolongeant la partie d'entrée 18a de l'ouverture 18 vers le bas. De plus, l'embrèvement 23 présente une surface courbe inclinée en direction du coeur du réacteur.

Sur la figure 7, on a représenté par des flèches 25, la direction et le sens de déplacement de l'eau de refroidissement dans le coeur du réacteur, au voisinage de la surface interne de la plaque 7. L'eau de refroidissement du réacteur circule dans le coeur dans la direction verticale et de bas en haut. Au niveau de l'embrèvement 23, l'écoulement d'eau en circulation à grande vitesse pénètre dans l'embrèvement et vient buter sur la tête de vis 16a. Le courant d'eau de refroidissement est ainsi dévié en direction des canaux 21 de la coupelle 17 et en direction de l'espace annulaire autour du fût 16b de la vis 16. On active ainsi les échanges entre le fluide circulant à l'intérieur du coeur et le fluide contenu dans l'espace annulaire autour du fût de la vis. Le confinement de ce liquide et les risques d'ébullition et de concentration de produits chimiques dans l'espace annulaire autour du fût de la vis sont donc encore réduits.

Du fait que la longueur de la tête de la vis du dispositif d'assemblage suivant le premier mode de réalisation de l'invention est réduite par rapport à la dimension correspondante des vis d'assemblage suivant l'art antérieur, il est possible d'augmenter la longueur du fût de la vis, ce qui diminue le niveau des contraintes dans la partie de jonction entre la tête et le fût de la vis.

Les figures 9 à 18 sont relatives à un second mode de réalisation d'un dispositif d'assemblage suivant l'invention.

Dans le cas du premier mode de réalisation représenté sur les figures 4 à 8, les ouvertures permettant de mettre en communication l'espace annulaire situé autour de la tête de vis, à l'intérieur de la partie d'entrée du trou de vis à l'intérieur de la cloison et l'espace annulaire situé autour du fût de la vis, à l'intérieur de la partie de sortie de l'ouverture du trou de passage de la vis à travers la cloison étaient réalisées de manière à traverser radialement une coupelle intercalée entre la tête de vis et l'épaulement du logement de la vis, la coupelle comportant également une virole permettant de réaliser le blocage de la vis en rotation dans le logement.

Dans le cas du second mode de réalisation représenté sur les figures 9 à 18, la mise en communication de l'espace annulaire autour de la tête de vis avec l'espace annulaire autour du fût de la vis est réalisée par l'intermédiaire d'ouvertures usinées dans le logement de la cloison.

Ces ouvertures sont prévues de manière à pouvoir être réalisées par usinage de la cloison par l'intérieur du cloisonnement.

En effet, contrairement aux renforts qui ne sont pas accessibles par l'intérieur du cloisonnement, lors d'opérations d'entretien et de réparation après arrêt du réacteur nucléaire, les cloisons sont accessibles et certains usinages peuvent être effectués à l'intérieur de la partie du logement traversant la cloison.

Sur les figures 9 à 18, on a représenté trois variantes de réalisation différentes d'un dispositif d'assemblage suivant l'invention dans lequel on met en communication l'espace annulaire autour de la tête de vis et l'espace annulaire autour du fût de la vis par une ouverture usinée dans une partie de la cloison qui est accessible par l'intérieur du cloisonnement.

Les éléments correspondants représentés sur les figures 9 à 18 sont désignés par les mêmes repères.

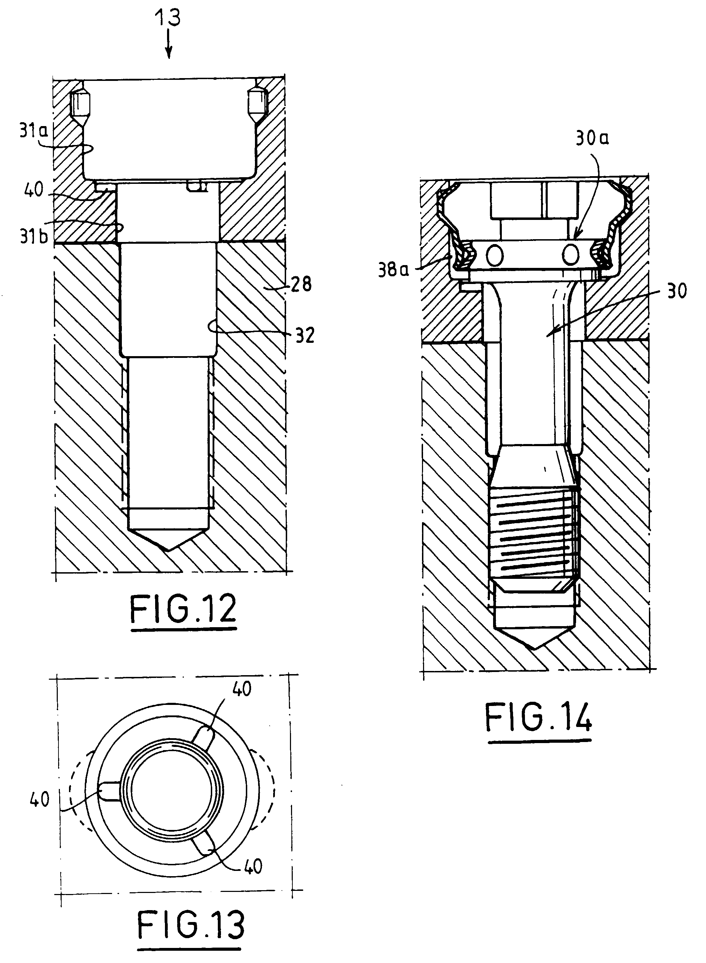

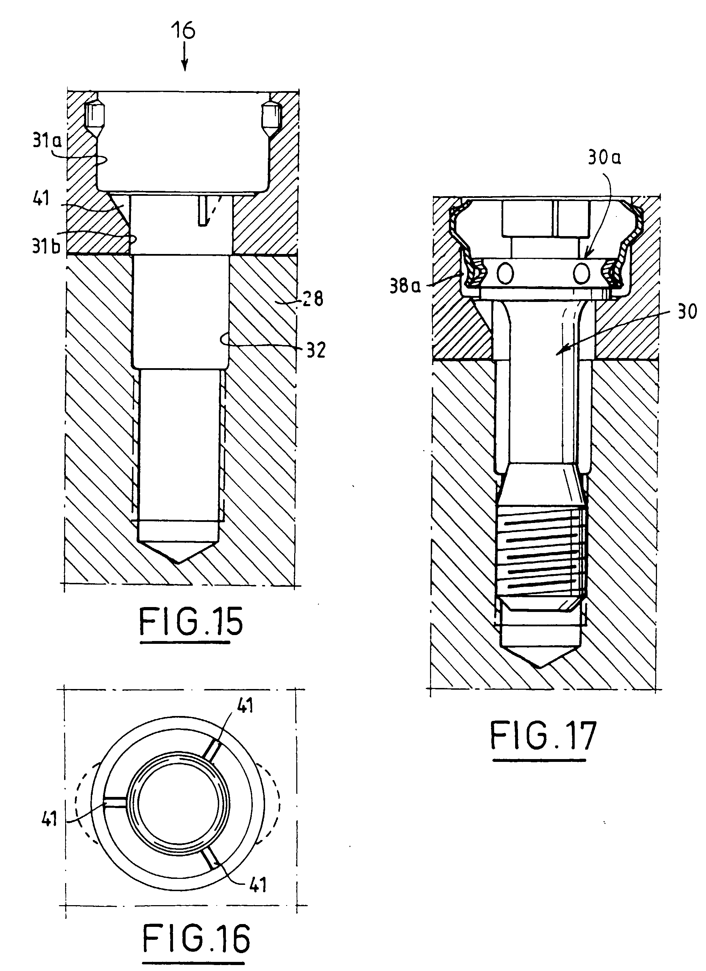

La structure générale du dispositif d'assemblage sera décrite en se référant aux figures 9 et 11, cette structure générale étant identique dans le cas du dispositif d'assemblage selon la première variante représentée sur les figures 9 et 11, dans le cas de la seconde variante représentée sur les figures 12 et 14 et dans le cas de la troisième variante représentée sur les figures 15 et 17.

Le dispositif d'assemblage, désigné de manière générale par le repère 29, permet de réaliser l'assemblage entre une cloison 27 et un renfort 28 qui sont représentés dans une vue en coupe par un plan horizontal sur les figures 9 et 11.

La cloison 27 est traversée par une ouverture 31 comportant une partie d'entrée à grand diamètre 31a et une partie de sortie à petit diamètre 31b.

Une ouverture 32 comportant une partie d'extrémité taraudée est usinée à l'intérieur du renfort 28, dans le prolongement axial de l'ouverture 31.

Une vis 30 est engagée dans les ouvertures 31 et 32 et vissée dans la partie taraudée de l'ouverture 32.

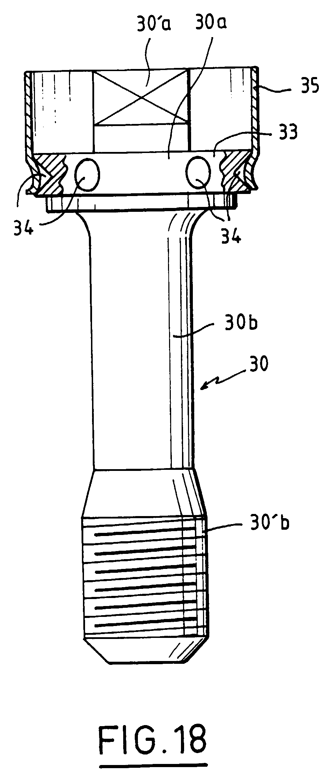

La vis 30 qui est représentée sur la figure 18 comporte une tête 30a et un fût 30b comportant une partie filetée 30'b destinée à venir se visser dans la partie taraudée de l'ouverture 32.

La tête de vis 30a comporte une partie profilée 30'a permettant de réaliser le vissage et le dévissage à l'aide d'un outil et une couronne 33 terminée par l'épaulement d'appui de la tête de vis, dans laquelle sont usinées six cavités 34 régulièrement espacées à la périphérie de la couronne 33.

Une virole en métal déformable 35 dont le diamètre intérieur est sensiblement égal au diamètre de la couronne 33 est engagée sur la couronne 33 et déformée à l'intérieur des cavités 34, de manière qu'on réalise ainsi une liaison par sertissage entre la virole déformable 35 et la tête de vis 30a.

Après vissage de la vis 30, à l'intérieur de l'ouverture 31, 32 de la cloison 27 et du renfort 28, on assure le blocage en rotation de la vis et la retenue de la tête et du fût de vis à l'intérieur des ouvertures 31 et 32, par sertissage de la virole déformable 35 à l'intérieur de quatre cavités 36 usinées dans la partie d'entrée à grand diamètre 31a de l'ouverture 31 et disposées sensiblement à 90° autour de l'axe de l'ouverture 31.

Comme il est visible sur la figure 11, la partie 33 de la tête de vis 30a présente un diamètre sensiblement inférieur au diamètre de la partie d'entrée 31a de l'ouverture 31 traversant la cloison, de sorte qu'il subsiste un espace annulaire 38a autour de la tête de vis à l'intérieur de l'ouverture 31. Du fait que les cavités 36 et les parties serties de la virole déformable 35 ne sont pas continues suivant la circonférence de la virole 35, l'espace annulaire 38a est en communication avec l'espace intérieur du cloisonnement par l'entrée de l'ouverture 31.

La partie lisse du fût 30b de la vis 30 présente un diamètre sensiblement inférieur au diamètre de la partie de sortie 31b de l'ouverture 31 et au diamètre de l'ouverture 32. Il subsiste donc un espace annulaire 38b autour du fût de la vis à l'intérieur des ouvertures 31b et 32.

Selon l'invention, on réalise un déconfinement de la vis en prévoyant des ouvertures mettant en communication les espaces annulaires 38a et 38b.

Cette disposition permet à de l'eau de refroidissement du réacteur nucléaire circulant à l'intérieur du cloisonnement de venir en contact avec le fût de la vis qui se trouve ainsi déconfiné.

Selon la première variante de réalisation représentée sur les figures 9, 10 et 11, on réalise par perçage trois ouvertures 39 rectilignes inclinées par rapport à l'axe de la vis traversant la cloison 27 entre le fond de la partie 31a de l'ouverture 31 et la partie 31b de l'ouverture 31.

Comme il est visible sur la figure 10, les axes des trois ouvertures 39 sont situées dans des plans passant par l'axe des ouvertures 31 et 32 et faisant entre eux des angles dièdres de 120°.

Comme il est visible sur la figure 11, lorsque la vis est engagée et fixée dans les ouvertures 31 et 32, l'épaulement d'appui de la tête 30a venant en appui dans une cavité usinée au fond de la partie 31a de l'ouverture 31 ne recouvre que partiellement les parties d'entrée des ouvertures 39, si bien que ces ouvertures assurent une mise en communication des espaces annulaires 38a et 38b.

Selon une seconde variante de réalisation représentée sur les figures 12, 13 et 14, on usine trois rainures 40 perpendiculaires à l'axe des ouvertures 31 et 32 dans le fond de la partie d'entrée 31a de l'ouverture 31.

Les rainures 40 débouchent, à l'une de leurs extrémités, dans la partie 31b de l'ouverture 31 et s'étendent radialement vers l'extérieur au-delà de l'épaulement d'appui de la vis 30 (voir figure 14).

De plus, on usine dans le fond de l'ouverture 31 une cavité annulaire dans laquelle vient en appui l'épaulement de la tête de vis 30a. Comme il est visible sur la figure 13, on prévoit trois rainures 40 de direction radiale faisant entre elles des angles de 120°.

Du fait que les rainures 40 débouchent à l'une de leurs extrémités dans l'espace annulaire 38b et à leur autre extrémité dans une zone du fond de la partie 31a de l'ouverture 31 à l'extérieur de l'épaulement d'appui de la tête de vis 30a, on obtient une mise en communication entre les espaces 38a et 38b et un déconfinement du fût de la vis 30.

Selon la troisième variante représentée sur les figures 15, 16 et 17, on usine trois fentes 41 inclinées par rapport à l'axe des ouvertures 31 et 32 dans le bord de l'ouverture 31b, de manière que chaque fente 41 débouche, à l'une de ses extrémités, dans l'ouverture 31b et, à son autre extrémité, dans le fond de l'ouverture 31a, dans une zone située au moins partiellement en dehors de la surface d'appui de l'épaulement de la tête 30a de la vis 30. L'épaulement de la tête 30a de la vis 30 vient en appui sur le fond de la partie 31a de l'ouverture 31, au niveau d'une cavité annulaire réusinée dans le fond de l'ouverture 31a.

Dans le cas de la première variante, de manière préférentielle, les trois ouvertures rectilignes 39 ont un diamètre de 2 à 3 mm. Dans le cas de la seconde variante, de préférence, on usine de trois à six rainures 40 ayant une largeur de 1 mm.

Dans le cas de la troisième variante, on prévoit de trois à six fentes ayant une largeur d'environ 1 mm.

Dans tous les cas, on réalise un déconfinement de la vis par mise en communication de l'espace annulaire autour de la tête de vis et de l'espace annulaire autour du fût de vis par un simple usinage de la cloison qui peut être effectué par l'intérieur du cloisonnement.

Le dispositif selon l'invention ne se limite pas aux modes de réalisation qui ont été décrits.

C'est ainsi que les ouvertures usinées dans les cloisons pour mettre en communication l'espace annulaire autour de la tête de vis avec l'espace annulaire autour du fût de vis peuvent être réalisées de manière différente de celle qui a été décrite. Ces ouvertures peuvent présenter des formes différentes de celles qui ont été décrites et peuvent être réalisées par tout procédé d'usinage pouvant être mis en oeuvre sous eau à l'intérieur du cloisonnement du réacteur nucléaire.

Dans le cas du premier mode de réalisation, la coupelle intercalée entre la tête de la vis et l'épaulement de l'ouverture de la première plaque peut présenter une forme différente de celle qui a été décrite. La coupelle peut être traversée par un nombre quelconque d'ouvertures de direction radiale permettant de mettre en communication l'espace annulaire autour du fût de la vis et la partie d'entrée de l'ouverture de la première plaque dans laquelle est logée la tête de vis.

La tête de vis peut présenter une forme différente de celles qui ont été décrites. En particulier, la partie de la tête de vis destinée à venir en prise avec un outil de vissage et de dévissage peut présenter aussi bien une surface latérale cylindrique dans laquelle sont percés des embrèvements qu'une surface latérale de forme prismatique.

Afin de permettre la circulation du fluide de refroidissement dans l'espace annulaire autour du fût de la vis et à travers les ouvertures traversant la cloison ou la coupelle, il est possible de prévoir un perçage de la seconde plaque constituant par exemple un renfort du cloisonnement, pour mettre en communication l'espace annulaire autour du fût de la vis avec une zone de la cuve du réacteur nucléaire située à l'extérieur du cloisonnement renfermant le coeur.

Le dispositif d'assemblage suivant l'invention peut être utilisé aussi bien dans le cas du remplacement de la vis d'un dispositif de fixation de plaques de cloisonnement ayant subi une rupture que dans le cas de la réalisation d'un cloisonnement neuf.

L'invention s'applique aussi bien à l'assemblage entre elles de plaques verticales constituant la paroi du cloisonnement en contact avec les assemblages du coeur qu'à l'assemblage des renforts disposés horizontalement aux plaques verticales du cloisonnement.

## Revendications

1. Dispositif d'assemblage d'une première et d'une seconde plaques métalliques (7, 8) du cloisonnement (4) entourant le coeur (2) d'un réacteur nucléaire refroidi par de l'eau sous pression, disposées sensiblement à angle droit et en contact l'une avec l'autre, le dispositif d'assemblage (15) comportant une vis (16, 16') ayant un fût (16b, 16'b) fileté sur une partie au moins de sa longueur et une tête (16a, 16'a) ayant un diamètre supérieur au diamètre du fût (16b, 16'b), une ouverture (18) traversant la première plaque métallique et présentant une partie d'entrée (18a) dont le diamètre est supérieur au diamètre de la tête (16a) de la vis (16), une partie de sortie (18b) dont le diamètre est compris entre le diamètre de la tête (16a) et le diamètre du fût (16b) de la vis (16, 16') et un épaulement (18c) entre la partie d'entrée (18a) et la partie de sortie (18b) ainsi qu'une ouverture borgne (20) taraudée dans la seconde plaque métallique (8), caractérisé par le fait qu'il comporte au moins une ouverture (21, 39, 40, 41) de mise en communication d'un premier espace annulaire (18a, 38a) autour de la tête de vis, à l'intérieur de la partie d'entrée (18a, 31a) de l'ouverture (18, 31) avec un second espace annulaire (18b, 31b) autour du fût (30b) de la vis (30) à l'intérieur de la partie de sortie (18b, 31b) de l'ouverture (31).

2. Dispositif suivant la revendication 1, caractérisé par le fait qu'il comporte de plus une coupelle (17) de forme tubulaire destinée à venir se loger dans la partie d'entrée (18a) de l'ouverture (18) de la première plaque (7) avec un jeu diamétral, en appui par son extrémité sur l'épaulement (18c) entre la partie d'entrée (18a) et la partie de sortie (18b) de l'ouverture (18) de la première plaque (7), ayant un alésage présentant une section d'entrée dont le diamètre est supérieur au diamètre de la tête de vis (16a, 16'a) et une section de sortie dont le diamètre est supérieur au diamètre du fût (16b, 16'b) de la vis (16, 16') et inférieur au diamètre de la tête (16a, 16'a) de la vis (16, 16'), séparées par un épaulement d'appui (17c, 17'c) de la tête de vis (16a, 16'a), la coupelle (17) comportant dans sa partie comprise entre l'épaulement d'appui (17c) de la vis (16, 16') et son extrémité en appui sur l'épaulement (18c) de l'ouverture (18) de la première plaque (7), au moins une ouverture traversante (21) de direction radiale entre son alésage interne et la surface externe de la coupelle (17) constituant l'ouverture de mise en communication du premier espace annulaire (18a) et du second espace annulaire (18b).

3. Dispositif suivant la revendication 2, caractérisé par le fait que la tête de vis (16a) comporte un épaulement d'appui de forme plane destiné à venir en contact avec l'épaulement (17c) de la coupelle (17) qui est également de forme plane.

4. Dispositif suivant la revendication 2, caractérisé par le fait que la tête de vis (16'a) comporte un épaulement d'appui (22) présentant la forme d'un secteur sphérique convexe et que l'épaulement d'appui correspondant (17'c) de la coupelle (17) est constitué par un secteur sphérique concave dont la forme correspond à celle de l'épaulement (22) de la tête de vis (16'a).

5. Dispositif suivant l'une quelconque des revendications 2 à 4, caractérisé par le fait que la coupelle (17) de forme tubulaire comporte une première partie (17a) entre l'épaulement (17c, 17'c) de l'alésage interne et l'extrémité d'appui sur l'épaulement (18c) de l'ouverture (18) de la première plaque (7) qui est traversée dans une direction radiale par au moins une ouverture (21) et une seconde partie (17b) dont l'épaisseur est inférieure à l'épaisseur de la première partie (17a) constituant une virole déformable dont l'alésage interne constitue la section d'entrée de l'alésage de la coupelle (17) destinée à recevoir la tête (16a) de la vis (16).

6. Dispositif suivant la revendication 5, caractérisé par le fait que la partie d'entrée (18a) de l'ouverture (18) traversant la première plaque (7) comporte au moins une cavité (19) en saillie radiale vers l'extérieur de l'ouverture (18) débouchant dans la partie d'entrée (18a) de l'ouverture (18) pour la fixation et le blocage en rotation de la coupelle (17) dans l'ouverture (18) de la première plaque (7), par sertissage d'une partie de la virole (17b) dans l'ouverture (19).

7. Dispositif suivant l'une quelconque des revendications 1 à 6, caractérisé par le fait que la tête (16a, 16'a) de la vis (16, 16') comporte une partie d'extrémité délimitée par une surface entièrement plane présentant une surface latérale comportant des surfaces de prise (24) par un outil de vissage et dévissage de la vis (1).

8. Dispositif suivant la revendication 7, caractérisé par le fait que la surface périphérique de la partie d'extrémité de la tête (16a) de la vis (16) comporte au moins une cavité (24) et que la coupelle (17) comporte une partie d'épaisseur réduite constituant une virole déformable pour le blocage de la coupelle (17) sur la tête de vis (16a, 16'a) par sertissage de la virole (17b) de la coupelle (17) dans la cavité (24).

9. Dispositif suivant l'une quelconque des revendications 1 à 8, caractérisé par le fait que la face de la première plaque sur laquelle débouche l'extrémité (18a) de l'ouverture traversante (18) est usinée pour constituer un embrèvement (23) communiquant avec la partie d'entrée (18a) de l'ouverture (18) et inclinée vers l'intérieur de l'ouverture (18) traversant la première plaque (7).

10. Dispositif d'assemblage suivant la revendication 1, caractérisé par le fait que l'ouverture (39, 40, 41) de mise en communication du premier espace annulaire (38a) avec le second espace annulaire (38b) est constitué par une ouverture usinée dans la première plaque (27) constituant une cloison du cloisonnement (4) entourant le coeur (2) du réacteur nucléaire.

11. Dispositif suivant la revendication 10, caractérisé par le fait que l'ouverture (39) est constituée par un perçage rectiligne incliné par rapport à l'axe de l'ouverture (31, 32) dans laquelle est engagée la vis (30) ayant une première extrémité débouchant dans le fond de la partie d'entrée (31a) de l'ouverture (31) dans laquelle est disposée la vis (30) et une seconde extrémité débouchant dans la partie de sortie (31b) de l'ouverture (31) traversant la cloison (27).

12. Dispositif suivant la revendication 10, caractérisé par le fait que l'ouverture (40) mettant en communication le premier espace annulaire (38a) et le second espace annulaire (38b) est constituée par une rainure de direction radiale perpendiculaire à l'axe de l'ouverture (31) dans laquelle est disposée la vis (30) usinée dans le fond de la partie d'entrée (31a) de l'ouverture (31) et débouchant à l'une de ses extrémités dans la partie de sortie (31b) de l'ouverture (31) recevant la vis (30).

13. Dispositif suivant la revendication 10, caractérisé par le fait que l'ouverture (41) est constituée par une fente inclinée par rapport à l'axe de l'ouverture (31, 32) recevant la vis (30) usinée dans le bord de la partie de sortie (31b) de l'ouverture (31) traversant la cloison (27) et débouchant à l'une de ses extrémités dans le fond de la partie d'entrée (31a) de l'ouverture (31) traversant la cloison (27) et à son autre extrémité dans la partie de sortie (31b) de l'ouverture (31) traversant la cloison (27).

14. Dispositif d'assemblage suivant l'une quelconque des revendications 10, 11, 12 et 13, caractérisé par le fait que la vis (30) comporte une virole déformable (35) rendue solidaire de la tête (30a) de la vis par sertissage à l'intérieur d'ouvertures (34) de la tête de vis (30a), le blocage en rotation de la vis (30) à l'intérieur de l'ouverture (31) traversant la cloison (27) étant assurée par sertissage de la virole déformable (35) à l'intérieur de cavités (36) usinées dans la partie d'entrée (31a) de l'ouverture (31) traversant la cloison (27).

15. Dispositif d'assemblage suivant l'une quelconque des revendications 10 à 14, caractérisé par le fait qu'il comporte trois ouvertures (39, 40, 41) de mise en communication du premier espace annulaire (38a) et du second espace annulaire (38b) usinées dans la cloison (27) et disposées à 120° l'une de l'autre autour de l'axe d'ouverture (31, 32) de la vis (30).

## Patentansprüche

1. Verbindungsvorrichtung einer ersten und einer zweiten metallischen Platte (7, 8) einer Abschirmung (4), die den Kern (2) eines Druckwasserkernreaktors umschließt, wobei die Platten im wesentlichen im rechten Winkel angeordnet sind und miteinander in Kontakt stehen, wobei die Verbindungsvorrichtung (15) umfaßt eine Schraube (16, 16') mit einem Schaft (16b, 16'b), der auf mindestens einem Teil seiner Länge gewindet ist und einen Kopf (16a, 16'a) aufweist, wobei der Kopfdurchmesser größer ist als der Schaftdurchmesser (16b, 16'b), eine die erste metallische Platte durchgehende Öffnung (18) mit einem Eingangsbereich (18a), dessen Durchmesser größer ist als der Durchmesser des Kopfes (16a) der Schraube (16), einem Ausgangsbereich (18b), dessen Durchmesser zwischen dem Durchmesser des Kopfes (16a) und dem Durchmesser des Schaftes (16b) der Schraube (16, 16') liegt und einer Schulter (18c) zwischen dem Eingangsbereich (18a) und dem Ausgangsbereich (18b), sowie ein gewindetes Blindloch (20) in der zweiten metallischen Platte (8),
dadurch gekennzeichnet, daß
die Verbindungsvorrichtung mindestens eine Öffnung (21, 39, 40, 41) zur Verbindung mit einem ersten ringförmigen Zwischenraum (18a, 38a) um den Schraubenkopf im Inneren des Eingangsbereichs (18a, 31a) der Öffnung (18, 31) mit einem zweiten ringförmigen Zwischenraum (18b, 31b) um den Schaft (30b) der Schraube (30) im Inneren des Ausgangsbereichs (18b, 31b) der Öffnung (31) umfaßt.

2. Vorrichtung nach Anspruch 1, gekennzeichnet durch eine röhrenförmige Kupelle (17), die dazu bestimmt ist im Eingangsbereich (18a) der Öffnung (18) der ersten Platte (7) mit diametralem Spiel mit ihrem Ende in Anschlag auf der Schulter (18c) zwischen dem Eingangsbereich (18a) und dem Ausgangsbereich (18b) der Öffnung (18) der ersten Platte (7) zu lagern, wobei die erste Platte eine Bohrung mit einem Eingangsquerschnitt aufweist, dessen Durchmesser größer ist als der Durchmesser des Schraubenkopfes (16a, 16'a), und einem Ausgangsquerschnitt, dessen Durchmesser größer als der Durchmesser des Schaftes (16b, 16'b) der Schraube (16, 16') und kleiner als der Durchmesser des Kopfes (16a, 16'a) der Schraube (16, 16') ist, wobei die Querschnitte durch einen Schulteranschlag (17c, 17'c) des Schraubenkopfes (16a, 16'a) getrennt sind, wobei die Kupelle (17) in ihrem Bereich, der zwischen dem Schulteranschlag (17c) der Schraube (16, 16') und ihrem Anschlagsende auf der Schulter (18c) der Öffnung (18) der ersten Platte (7) liegt, mindestens eine durchgehende Öffnung (21) mit radialer Richtung zwischen ihrer Innenbohrung und der äußeren Oberfläche der Kupelle (17) aufweist, wobei die durchgehende Öffnung (21) die Verbindungsöffnung des ersten ringförmigen Zwischenraumes (18a) und des zweiten ringförmigen Zwischenraums (18b) bildet.

3. Vorrichtung nach Anspruch 2, dadurch gekennzeichnet, daß der Schraubenkopf (16a) einen flachen Schulteranschlag aufweist, der dazu bestimmt ist, mit der Schulter (17c) der Kupelle (17) in Kontakt zu treten, die ebenso flachförmig ist.

4. Vorrichtung nach Anspruch 2, dadurch gekennzeichnet, daß der Schraubenkopf (16'a) einen Schulteranschlag (22) mit einem konvexförmigen Kugelausschnitt aufweist, und daß der entsprechende Schulteranschlag (17'c) der Kupelle (17) durch einen konkavförmigen Kugelausschnitt gebildet ist, dessen Form der Form der Schulter (22) des Schraubenkopfes (16'a) entspricht.

5. Vorrichtung nach mindestens einem der Ansprüche 2 bis 4, dadurch gekennzeichnet, daß die röhrenförmige Kupelle (17) einen ersten Bereich (17a) zwischen der Schulter (17c, 17'c) der Innenbohrung und dem Anschlagsende auf der Schulter (18c) der Öffnung (18) der ersten Platte (7), die in radialer Richtung durch mindestens eine Öffnung (21) durchbohrt ist, und einen zweiten Bereich (17b) aufweist, dessen Dicke kleiner ist als die Dicke des ersten Bereiches (17a), der einen verformbaren Ring bildet, dessen Innenbohrung den Eingangsquerschnitt der Bohrung der Kupelle (17) bildet, die dazu bestimmt ist, den Kopf (16a) der Schraube (16) aufzunehmen.

6. Vorrichtung nach Anspruch 5, dadurch gekennzeichnet, daß der Eingangsbereich (18a) der durch die erste Platte (7) durchgehenden Öffnung (18) mindestens eine radial zum Äußeren der Öffnung (18) hin ragende Ausbuchtung (19) aufweist, die in den Eingangsbereich (18a) der Öffnung (18) mündet, um die Befestigung und die Drehblockierung der Kupelle (17) in der Öffnung (18) der ersten Platte (7) durch Aufquetschen eines Teils des Ringes (17b) in die Öffnung (19) zu sichern.

7. Vorrichtung nach mindestens einem der Ansprüche 1 bis 6, dadurch gekennzeichnet, daß der Kopf (16a, 16'a) der Schraube (16, 16') einen Endbereich umfaßt, der durch eine absolut plane Oberfläche begrenzt ist, die eine Seitenoberfläche mit Halteflächen (24) für ein Werkzeug zum Schrauben und Entschrauben der Schraube (1) darstellt.

8. Vorrichtung nach Anspruch 7, dadurch gekennzeichnet, daß die Umfangsfläche des Endbereichs des Kopfes (16a) der Schraube (16) mindestens eine Ausbuchtung (24) umfaßt, und daß die Kupelle (17) einen Bereich mit verringerter Dicke aufweist, der einen verformbaren Ring zum Blockieren der Kupelle (17) auf dem Schraubenkopf (16a, 16'a) durch Aufquetschen des Ringes (17b) der Kupelle (17) in die Ausbuchtung (24) bildet.

9. Vorrichtung nach mindestens einem der Ansprüche 1 bis 8, dadurch gekennzeichnet, daß die Fläche der ersten Platte, in die das Ende (18a) der durchgehenden Öffnung (18) mündet, bearbeitet ist, um einen Versatz (23) zu bilden, der mit dem Eingangsbereich (18a) der Öffnung (18) in Verbindung steht und ins Innere der Öffnung (18) geneigt ist, die die erste Platte (7) durchlocht.

10. Vorrichtung nach Anspruch 1, dadurch gekennzeichnet, daß die Verbindungsöffnung (39, 40, 41) des ersten ringförmigen Zwischenraums (38a) mit dem zweiten ringförmigen Zwischenraum (38b) durch eine Öffnung gebildet ist, die in der ersten Platte (27) eingearbeitet ist, die eine Trennwand der den Kern des Kernreaktors umschließenden Abschirmung (4) bildet.

11. Vorrichtung nach Anspruch 10, dadurch gekennzeichnet, daß die Öffnung (39) durch eine geradlinige Lochung gebildet ist, die zur Achse der Öffnung (31, 32) hin geneigt ist, in der die Schraube (30) eingeführt ist, wobei die Schraube ein erstes Ende, das in den Boden des Eingangsbereiches (31a) der Öffnung (31) mündet, in der die Schraube (30) angeordnet ist, und ein zweites Ende aufweist, das in den Ausgangsbereich (31b) der Öffnung (31) mündet, die die Trennwand (27) durchlocht.

12. Vorrichtung nach Anspruch 10, dadurch gekennzeichnet, daß die Öffnung (40), die den ersten ringförmigen Zwischenraum (38a) und den zweiten ringförmigen Zwischenraum (38b) in Verbindung bringt, durch eine radiale Nut senkrecht zur Achse der Öffnung (31) gebildet ist, in der die Schraube (30) angeordnet ist, wobei die Nut in den Boden des Eingangsbereichs (31a) der Öffnung (31) eingearbeitet ist und in einer ihrer Enden in den Ausgangsbereich (31b) der die Schraube (30) aufnehmenden Öffnung (31) mündet.

13. Vorrichtung nach Anspruch 10, dadurch gekennzeichnet, daß die Öffnung (41) durch einen Spalt gebildet ist, der zur Achse der die Schraube (30) aufnehmenden Öffnung (31, 32) hin geneigt ist, wobei der Spalt in den Rand des Ausgangsbereichs (31b) der Öffnung (31) eingearbeitet ist, die die Trennwand (27) durchlocht, und an einem seiner Enden in den Boden des Eingangsbereichs (31a) der Öffnung (31) mündet, die die Trennwand (27) durchlocht, und an seinem anderen Ende in den Ausgangsbereich (31b) der Öffnung (31) mündet, die die Trennwand (27) durchlocht.

14. Vorrichtung nach mindestens einem der Ansprüche 10 bis 13, dadurch gekennzeichnet, daß die Schraube (30) einen verformbaren Ring (35) aufweist, der mit dem Kopf (30a) der Schraube durch Quetschen ins Innere der Öffnung (34) des Schraubenkopfes (30a) verbunden ist, wobei die Drehblockierung der Schraube (30) im Inneren der Öffnung (31), die die Trennwand (27) durchlocht, durch das Quetschen des verformbaren Ringes (35) ins Innere der Ausbuchtung (36) gesichert ist, die im Eingangsbereich (31a) der Öffnung (31), die die Trennwand (27) durchlocht, eingearbeitet ist.

15. Vorrichtung nach mindestens einem der Ansprüche 10 bis 14, dadurch gekennzeichnet, daß sie drei Verbindungsöffnungen (39, 40, 41) des ersten ringförmigen Zwischenraums (38a) und des zweiten ringförmigen Zwischenraums (38b) aufweist, die in der Trennwand (27) eingearbeitet sind und um 120° voneinander um die Öffnungsachse (31, 32) der Schraube (30) angeordnet sind.

## Claims

1. Apparatus for joining first and second metal plates (7, 8) of the enclosure (4) surrounding the core (2) of a pressurised water-cooled nuclear reactor, arranged substantially at right angles and in contact with one another, the joining device (15) comprising a screw (16, 16') having a shaft (16b, 16'b) which is threaded over at least part of its length and a head (16a, 16'a) which is larger in diameter than the shaft (16b, 16'b), an opening (18) passing through the first metal plate and having an entry portion (18a) the diameter of which is larger than the diameter of the head (16a) of the screw (16), an outlet portion (18b) the diameter of which is between the diameter of the head (16a) and the diameter of the shaft (16b) of the screw (16, 16') and a shoulder (18c) between the entry portion (18a) and the exit portion (18b) as well as a blind bore (20) tapped in the second metal plate (8), characterised in that it comprises at least one opening (21, 39, 40, 41) for allowing a first annular space (18a, 38a) around the screw head, inside the entry portion (18a, 31a) of the opening (18, 31), to communicate with a second annular space (18b, 31b) around the shaft (30b) of the screw (30) inside the exit portion (18b, 31b) of the opening (21).

2. Apparatus according to claim 1, characterised in that it further comprises a tubular cup (17) adapted to sit in the entry portion (18a) of the opening (18) in the first plate (7) with diametric play, abutting with its end on the shoulder (18c) between the entry portion (18a) and the exit portion (18b) of the opening (18) in the first plate (7), having a bore with an entry section the diameter of which is greater than the diameter of the screw head (16a, 16'a) and an exit section the diameter of which is greater than the diameter of the shaft (16b, 16'b) of the screw (16, 16') and less than the diameter of the head (16a, 16'a) of the screw (16, 16') separated by an abutment shoulder (17c, 17'c) of the screw head (16a, 16'a), the cup (17) comprising, in its part between the abutment shoulder (17c) of the screw (16, 16') and its end abutting on the shoulder (18c) of the opening (18) in the first plate (7), at least one through-hole (21) extending radially between its inner bore and the outer surface of the cup (17) constituting the opening for communication between the first annular space (18a) and the second annular space (18b).

3. Apparatus according to claim 2, characterised in that the screw head (16a) comprises an abutment shoulder of planar construction adapted to come into contact with the shoulder (17c) of the cup (17) which is also planar.

4. Apparatus according to claim 2, characterised in that the screw head (16'a) comprises an abutment shoulder (22) in the form of a convex spherical sector and in that the corresponding abutment shoulder (17'c) of the cup (17) consists of a concave spherical sector the shape of which corresponds to that of the shoulder (22) of the screw head (16'a).

5. Apparatus according to any of claims 2 to 4, characterised in that the tubular cup (17) comprises a first portion (17a) between the shoulder (17c, 17'c) of the inner bore and the end abutting on the shoulder (18c) of the opening (18) in the first plate (7) which has at least one opening (21) passing through it in the radial direction, and second portion (17b) the thickness of which is less than the thickness of the first portion (17a) constituting a deformable shroud the inner bore of which constitutes the entry section of the bore in the cup (17) adapted to accommodate the head (16a) of the screw (16).

6. Apparatus according to claim 5, characterised in that the entry portion (18a) of the opening (18) passing through the first plate (7) comprises at least one cavity (19) projecting radially outside the opening (18) which opens into the entry portion (18a) of the opening (18) for fixing and rotationally locking the cup (17) in the opening (18) in the first plate (7) by crimping part of the shroud (17b) in the opening (19).

7. Apparatus according to any one of claims 1 to 6, characterised in that the head (16a, 16'a) of the screw (16, 16') comprises an end portion defined by a totally flat surface having a lateral surface which comprises surfaces for engagement (24) by means of a tool for tightening and unscrewing the screw (1).

8. Apparatus according to claim 7, characterised in that the peripheral surface of the end portion of the head (16a) of the screw (16) comprises at least one cavity (24) and in that the cup (17) comprises a portion of reduced thickness constituting a deformable shroud for locking the cup (17) on the screw head (16a, 16'a) by crimping the shroud (17b) of the cup (17) in the cavity (24).

9. Apparatus according to any one of claims 1 to 8, characterised in that the surface of the first plate onto which the end (18a) of the through hole (18) opens is machined to form a recess (23) communicating with the entry portion (18a) of the opening (18) and inclined towards the inside of the opening (18) passing through the first plate (7).

10. Joining apparatus according to claim 1, characterised in that the opening (39, 40, 41) for providing communication between the first annular space (38a) and the second annular space (38b) consists of an opening machined in the first plate (27) constituting a baffle of the enclosure (4) surrounding the core (2) of the nuclear reactor.

11. Apparatus according to claim 10, characterised in that the opening (39) consists of a rectilinear drill hole which is inclined relative to the axis of the opening (31, 32) in which the screw (30) engages having a first end opening into the bottom of the entry portion (31a) of the opening (31) in which the screw (30) is located and a second end opening into the exit portion (31b) of the opening (31) which passes through the baffle (27).

12. Apparatus according to claim 10, characterised in that the opening (40) which enables the first annular space (38a) and the second annular space (38b) to communicate consists of a radially directed groove perpendicular to the axis of the opening (31) in which the screw (30) is located, machined in the base of the entry portion (31a) of the opening (31) and terminating, at one end, in the exit portion (31b) of the opening (31) which accommodates the screw (30).

13. Apparatus according to claim 10, characterised in that the opening (41) consists of a slot which is inclined relative to the axis of the opening (31, 32) accommodating the screw (30) machined in the edge of the exit portion (31b) of the opening (31) passing through the baffle (27) and terminating, at one end, in the base of the entry portion (31a) of the opening (31) passing through the baffle (27) and, at its other end, in the exit portion (31b) of the opening (31) passing through the baffle (27).

14. Joining apparatus according to any one of claims 10, 11, 12 and 13, characterised in that the screw (30) comprises a deformable shroud (35) which is made integral with the head (30a) of the screw by crimping inside openings (34) in the screw head (30a), the screw (30) being rotationally locked inside the opening (31) which passes through the baffle (27) by the crimping of the deformable shroud (35) inside cavities (36) machined in the entry portion (31a) of the opening (31) passing through the partition (27).

15. Joining apparatus according to any one of claims 10 to 14, characterised in that it comprises three openings (39, 40, 41) for enabling the first annular space (38a) and the second annular space (38b) to communicate with one another, these openings being machined in the baffle (27) and arranged at 120° from one another about the axis of opening (31, 32) of the screw (30).
